# EUROPEAN PATENT APPLICATION

(11) **EP 1 741 675 A1**
(43) Date of publication of application: **10.01.2007**
(21) Application number: 05254213.1
(22) Date of filing: 05.07.2005
(51) Int. Cl.: C02F 1/461, C02F 1/467, C25B 11/02, C25B 11/04, C02F 1/76

(54) **Water treatment method and apparatus**

(71) Applicant: Adept Water Technologies A/S, 6000 Kolding (DK)
(72) Inventor: Napper, David, 6000 Kolding (DK)
(74) Representative: Haley, Stephen

(57) **Abstract**

A water treatment device comprising a cathode and an anode comprising a matrix of first and second metals. Means applies a predetermined potential difference between the anode and cathode and the matrix is arranged such that, when the predetermined potential difference is applied in use, both electroporation and production of oxidants occur in untreated water passing, in use, between the anode and cathode to kill, in use, biological contaminants.

## Description

The present invention relates to treatment of water and in particular to treatment of water intended to be of a quality suitable for human consumption.

Conventional methods of treating water use chemicals, distillation, filtration or electrochemical devices. In electrochemical devices an anode and a cathode are arranged to allow water to pass therebetween. Various types of surface are possible for the electrodes to generate a variety of different reactions in the water that passes between the two electrodes. At the anode halides may be oxidised to their corresponding halogen, most commonly chlorine, via dimerisation of halogen radicals and water may be oxidised to dioxygen and protons. At the cathode dioxygen may be reduced to hydrogen peroxide, and water to hydrogen and hydroxyl ions. Chlorine, chlorine radicals and hydrogen peroxide may all kill bacteria in the water.

There are several problems associated with the use and generation of chlorine in water treatment, due to its negative environmental effects and the resultant legal limits on the levels present in water intended for human consumption. Examples of the undesirable environmental effects of the use of chlorine are that it reacts with nitrogenous compounds to give chloramines, which are poor biocides and can give rise to unpleasant odours; furthermore it is reactive with other organic materials and may yield environmentally unacceptable compounds such as chloroform or chloroalkanes which are carcinogenic as well as reacting with naturally occurring phenolic compounds to form chlorinated compounds.

In recent years the use of chlorine has been increasingly discouraged and limited. For example, the German drinking water directive (based on EU Council Directive 98/83/EC of November 1998 on the quality of water intended for human consumption) limits the presence of chlorine in drinking water to 0.5 mg/l. Additionally, in much of the food industry it is also forbidden to use high concentrations of chlorine in water that comes in contact with food products. Usually "drinking water quality" is acceptable for water which comes in contact with food and generally is the quality specified for use in many processes in food factories.

Furthermore, on a larger scale, unpolluted water is an ever decreasing resource. If water can be used or reused with minimal addition of undesirable chemicals, it conserves the resource.

However, for the disinfection of water with chlorine it is often necessary to use concentrations higher than the allowable limit in drinking water, in order to have the desired reduction in numbers of bacteria capable of creating colonies. In the European Hygienic Engineering and Design Group guidelines "Safe and Hygienic Water Treatment in Food Factories" it is stated that levels of chlorine up to 1000 ppm can be required to control bacteria.

The aim of the present invention is to provide a way of treating water while maintaining drinking water quality and avoiding excess use of chemicals. The water can then be directly used for human consumption or used in a number of processes in industry where that quality is required.

According to the present invention there is provided a water treatment device comprising:
a cathode;
an anode comprising a matrix of first and second metals; and
means for applying a predetermined potential difference between the anode and cathode;
wherein the matrix is arranged such that, when the predetermined potential difference is applied in use, both electroporation and production of oxidants occur in untreated water passing, in use, between the anode and cathode to kill, in use, biological contaminants.

The present invention limits the creation of chlorine to acceptable levels while taking advantage of the chlorine radicals as part of the kill of bacteria. The rest of the kill is provided as electroporation of the membrane of the bacteria.

An example of the present invention will now be described with reference to the accompanying drawings, in which:

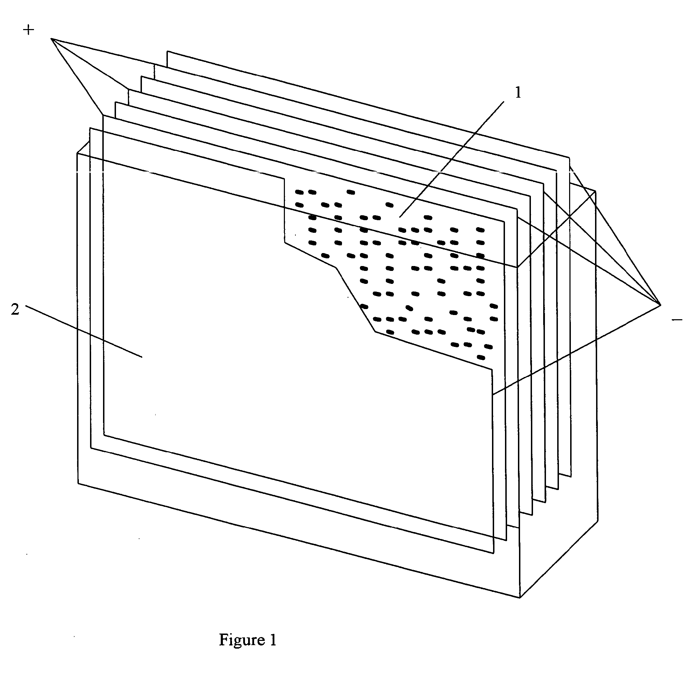

Figure 1 is a schematic perspective diagram of an example water treatment device according to the present invention.

Referring to figure 1, a water treatment device according to an example of the present invention comprises anodes 1 with a metal matrix and cathodes 2 which are held in non-conducting structures (not shown) to maintain a constant distance between the electrodes. The electrodes are connected to a DC power supply. The electrodes 1 and 2 are inserted into the water to be treated.

Water to be treated comes in many variations of parameters, including temperature, flow, organic and inorganic material in the water and their respective characteristics. In order to avoid the discrepancies that can occur if the parameters are changed, an empirical approach is used to determine the composition of an electroporation anode which has the desired functionality. Firstly, it is necessary to have two anodes with identical geometry, one with a perfect platinum surface.

Free chlorine is generated on a platinum surface at a fixed rate under fixed conditions and reacts equally with bacteria and organic materials in near identical circumstances. However, free chlorine has an initial, very rapid reaction rate which is difficult to measure accurately. Therefore the quality of the water after the initial rapid killing of the bacteria and reaction with other substances in the water is measured for the first anode and a given concentration of free chlorine at a certain time after the reaction to give a more accurate measurement. The concentration of free chlorine in the test solution is measured under the parameters of the application in question. This includes the concentration of the relevant compounds and pH.

A second anode of identical size and geometry as the first anode is then used with the test solution. Matrix metal is added to the platinum until the free chlorine concentration at the same certain time after treatment of the test solution is approximately 50% of that obtained with the anode with the perfect platinum surface. The two test solutions are then examined for residual live bacterial content.

The applicant has found that a metal matrix suitable for reducing the live bacterial content by a sufficient amount may have spots of matrix metal in the platinum covering about 1% of the area of the anode in total. The diameter of the matrix metal spots is in the range 10⁻⁷m to 10⁻⁴m, with spots typically having a diameter of approximately the same order to magnitude as the diameter of a bacterium, that is of the order of 10⁻⁶m.

The standard reduction potential of chlorine (or the oxidation potential of chloride to chlorine) is 1.36 V relative to the normal hydrogen electrode (NHE).The potential indicated is the force necessary to remove electrons from chloride ions. Most electrochemical reactions, including the oxidation of chloride ion to chlorine, require a potential more extreme than the standard value, known as an "overpotential", to proceed at a reasonable rate. The overpotential depends on the reaction and the electrode material. When a chloride ion loses an electron to the anode a very reactive chlorine radical is formed which may form chlorine or attack organic materials; however both chlorine and chlorine radical may kill bacteria and oxidize organic matter. Various electrode materials have different overpotentials for the oxidation of chloride to chlorine and thus different selectivities for the oxidation.

These known activities are used to kill bacteria based on oxidation and occur in the present invention to a limited degree. However, to limit the formation of chlorine, other reactions are also needed.

The present invention makes use of the process of electroporation for the remainder of the killing of bacteria needed to purify water to a satisfactory degree. Electroporation has been used for many years to open living cells in order to exchange some DNA or to allow the cell to take in special drugs, as in cancer treatment. The cell is enclosed by a membrane. In living cells there is potential difference between the solution outside the membrane and the interior of the cell of approximately 100 mV. This corresponds to a potential gradient across the membrane of 200 000 to 300 000 V/cm. When an external potential is applied across a cell most of the potential drop occurs in the membrane due to its higher ohmic resistance. When the applied potential is in a range higher than a certain value but below a critical value openings in the membrane takes place which may be used for exchange of chemicals and DNA. In this potential range the holes close again when the external potential is removed. However, when the potential exceeds the critical value the holes in the membrane remains open. This will kill the bacteria either by loss of essential chemicals or by influx of water driven by the difference in osmotic pressure between the inside and outside of the cell.

The applicant has determined that it is possible to take advantage of both of the function to kill bacteria while not creating so much chlorine that the water treated tastes nor smells of chlorine. The chlorine content is also below levels allowed for the drinking water directives. The present invention achieves this by combining an anode surface such as platinum, which generates the limited quantity of oxidants desired for the production of chlorine, with another metal which allows for a freer passage of electrons to additionally exert the correct potential difference across the body of bacteria to cause death through electroporation.

In this mix matrix the platinum maintains its function as it is the most prevalent material on the anode surface, but due to its overpotential it forces concentrated flow of electrons from the pores of the other metal embedded on the anode surface at a potential gradient necessary to give an irreversiable destruction of the membrane of the cells of many of the bacteria in the solution.

As well as the desirable reduction in levels of chlorine or other halogens that the present provides, the present invention reduces the amount of energy needed treat water to a satisfactory level.

## Claims

1. A water treatment device comprising:
a cathode;
an anode comprising a matrix of first and second metals; and
means for applying a predetermined potential difference between the anode and cathode;
wherein the matrix is arranged such that, when the predetermined potential difference is applied in use, both electroporation and production of oxidants occur in untreated water passing, in use, between the anode and cathode to kill, in use, biological contaminants.

2. A water treatment device according to claim 1, wherein the matrix of first and second metals comprises a layer of the first metal which covers part of the surface of the anode, the layer containing holes in which spots of the second metal are embedded.

3. A water treatment device according to claim 2, wherein the spots of the second metal have a diameter between 10⁻⁷m and 5 x 10⁻⁴m.

4. A water treatment device according to claim 3, wherein the spots of the second metal have a diameter between 10⁻⁷m and 10⁻⁵m.

5. A water treatment device according to any preceding claim, wherein the second metal covers up to 1 % of the area of the anode.

6. A water treatment device according to any preceding claim, wherein the first metal is platinum.
